# EUROPEAN PATENT SPECIFICATION

(11) **EP 1 975 131 B1**
(45) Date of publication and mention of the grant of the patent: **08.07.2015**
(21) Application number: 08152866.3
(22) Date of filing: 18.03.2008
(51) Int. Cl.: C03B 33/03, C03B 33/07

(54) **Machine for cutting sheets of glass in general, and laminated glass in particular, with automatic positioning means**
Maschine zum Schneiden von Glasscheiben im Allgemeinen und laminiertem Glas im Besonderen, mit automatischen Positionierungsmitteln
Machine pour découper des plaques de verre en général, et du verre stratifié en particulier, avec des supports de positionnement automatiques

(30) Priority: 28.03.2007 IT MI20070624
(43) Date of publication of application: 01.10.2008
(73) Proprietor: Macotec S.R.L., 23010 Rogolo, (SO) (IT)
(72) Inventor: Colli, Maurizio, 23019 Traona SO (IT)
(74) Representative: Modiano, Micaela Nadia

(56) References cited:
- EP-A- 0 807 609
- EP-A- 1 201 612
- EP-A- 1 595 853
- US-A1- 2001 017 045
- US-A1- 2005 178 258

## Description

The present invention relates to a machine for cutting sheets of glass in general, and laminated glass in particular, with automatic positioning means.

As is known, the cutting of glass sheets to obtain two separate sheet portions generally entails performing scoring and cut running; in the case of laminated glass, in addition to the operations described above, heating is also performed in order to soften the layer of plastic material that is interposed between the two sheets that constitute the laminated glass and then parting is performed with mutual spacing of the two portions.

In some cases, normal cutting machines are equipped with systems capable of performing other operations which are different from cutting or parting.

Such operations are known in the jargon as edging and arrissing.

Edging consists in removing coatings applied to the surface of the glass, composed of precious metals which must be removed on the edges, before assembly operations, in the case of a double-glazing unit.

Arrissing consists in removing the edges generated between the surface of the glass, on the scoring side and the perpendicular surface obtained after cutting. Microcracks caused by the scoring and parting process may be present in this region and may cause breakage of the glass due to thermal or mechanical stresses.

Arrissing is understood also to be useful in terms of safety, since it also eliminates the sharp edge.

In some cases, with a particularly tough plastic separation element, it is also possible to provide a blade for cutting the separation element.

Currently, the operations for positioning the sheet in order to provide sheet portions of a preset size are performed predominantly by hand, by using a worktable which is generally equipped with an air-cushion system which allows the operator to move and turn the sheet without particular efforts, putting it in the conditions for measurement by means of mechanical abutments which allow to obtain the portions of sheet in the selected sizes.

In order to try to automate such operations, solutions have already been proposed, such as for example in EP 0807609, which allow to automate at least partly the positioning and rotation operations.

The apparatus disclosed in the patent cited above has a movement system substantially constituted by a sucker which mates with a portion of a sheet proximate to a corner which is adjacent to the cutting line, so as to provide a rotation and movement of the sheet in order to achieve positioning.

Rotation is typically provided in practice around the axis of symmetry between the axis X or cutting axis T and the axis Y of the sheet in a point which is proximate to the reference front edge of the machine.

With such systems, first of all, there are limitations on the diagonal of the portion of sheet being turned, since with a fixed-fulcrum rotation system it is not possible to turn sheet portions whose diagonal exceeds a certain size, with consequent severe difficulties in managing large pieces.

Other difficulties are encountered in managing small parts due to the fact that a sucker-based system has a considerable footprint in terms of space and has to work on a certain contact area, and therefore it is not possible to manage strips of sheets with small dimensions.

Another drawback is further constituted by difficulty in moving narrow strips or portions of sheet from one side of the machine to the other and more precisely from the two parts of the machine that are separated by the cutting line.

US2001/0017045 discloses a unit for notching a sheet of laminated glass, wherein the gripping and handling means are not arranged at the cutting line and thus do not perform a translational motion along the cutting line.

EP 1 595 853 discloses clamps to handle laminated glass sheets.

ES 2 265 244 discloses a glass cutting table using a system for rotation, positioning, displacement and precise measurement of glass sheets.

The aim of the invention is to solve the problem described above by providing a machine for cutting sheets of glass in general and laminated glass in particular, which allows to handle automatically portions of sheet with the smallest possible number of passages, minimizing or even eliminating operator intervention.

Within this aim, an object of the invention is to provide a machine for cutting sheets of glass in general and laminated glass in particular which allows, once a portion of glass has been parted, to turn portions of the sheet that has just been cut, to arrange them in position for subsequent cutting, to cut them again in order to have the sheet finished to size, with repositioning of the remaining sheet for subsequent cuts and so forth, until the original sheet is used up and until small pieces and any waste are finally extracted.

Another object of the present invention is to provide a machine for cutting sheets of glass in general which, thanks to its particular constructive characteristics, is capable of giving the greatest assurances of reliability and safety in use.

Still another object of the present invention is to provide a machine which can be obtained easily starting from commonly commercially available elements and materials and is also competitive from a merely economical standpoint.

This aim and these and other objects, which will become better apparent hereinafter, are achieved by a machine for cutting sheets of glass in general and laminated glass in particular, as defined in claim 1.

Further characteristics and advantages of the present invention will become better apparent from the description of a preferred but not exclusive embodiment of a machine for cutting sheets of glass in general and laminated glass in particular, with automatic positioning means, illustrated by way of non-limiting example in the accompanying drawings, wherein:

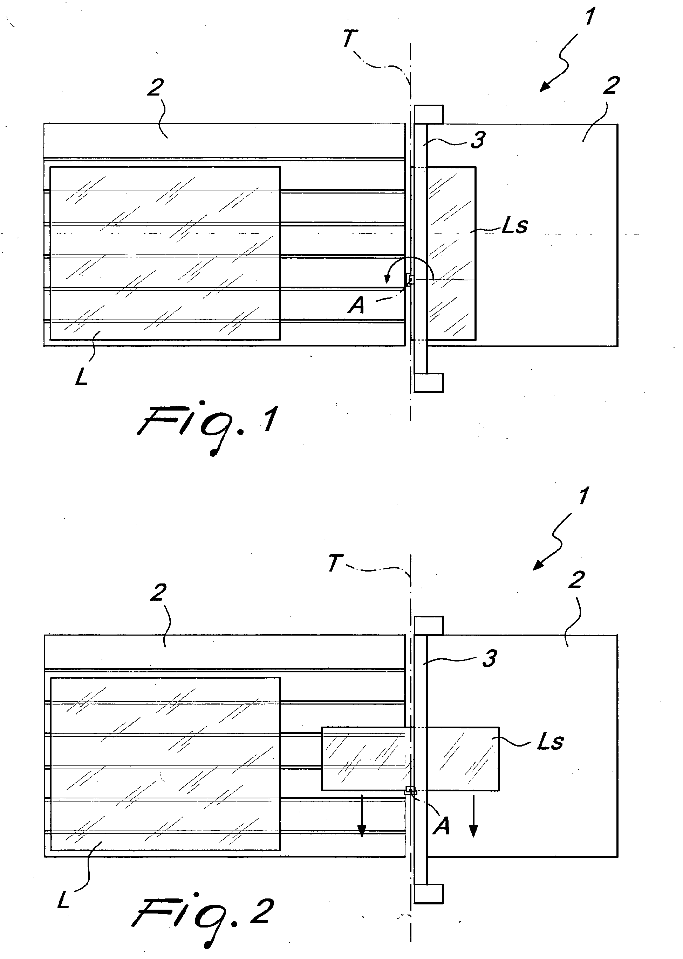

Figure 1 is a schematic plan view of the machine according to the invention after cutting a strip of sheet;
Figure 2 is a plan view of the machine, with a rotation of the strip of sheet completed;

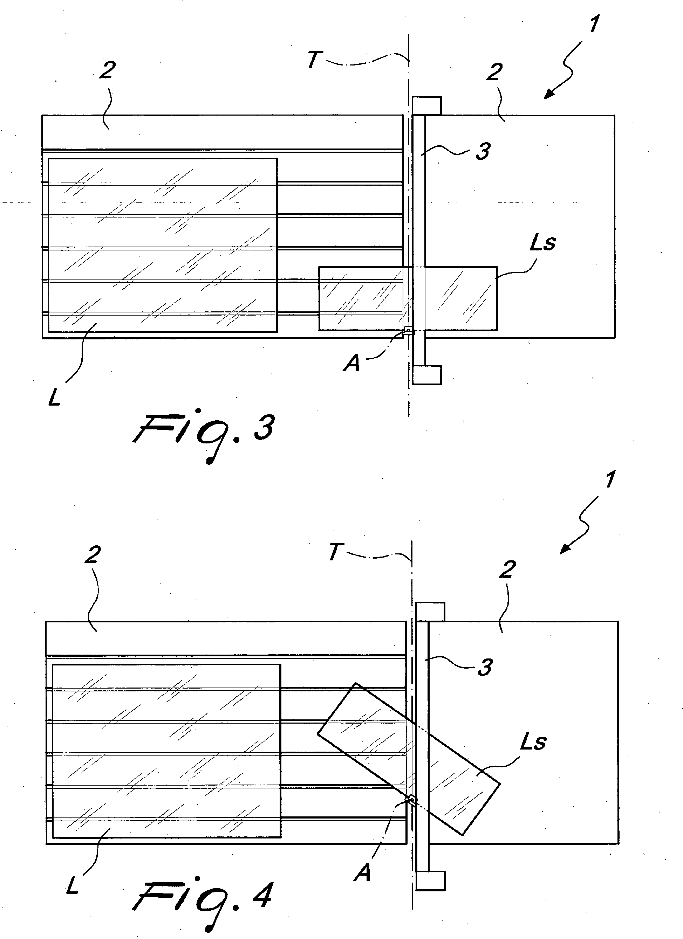

Figure 3 is a view of the arrangement of the strip of sheet at the front edge of the machine, with positioning to provide a cut to the preset size;
Figure 4 is a schematic view of the arrangement of a sheet portion for an oblique cut;

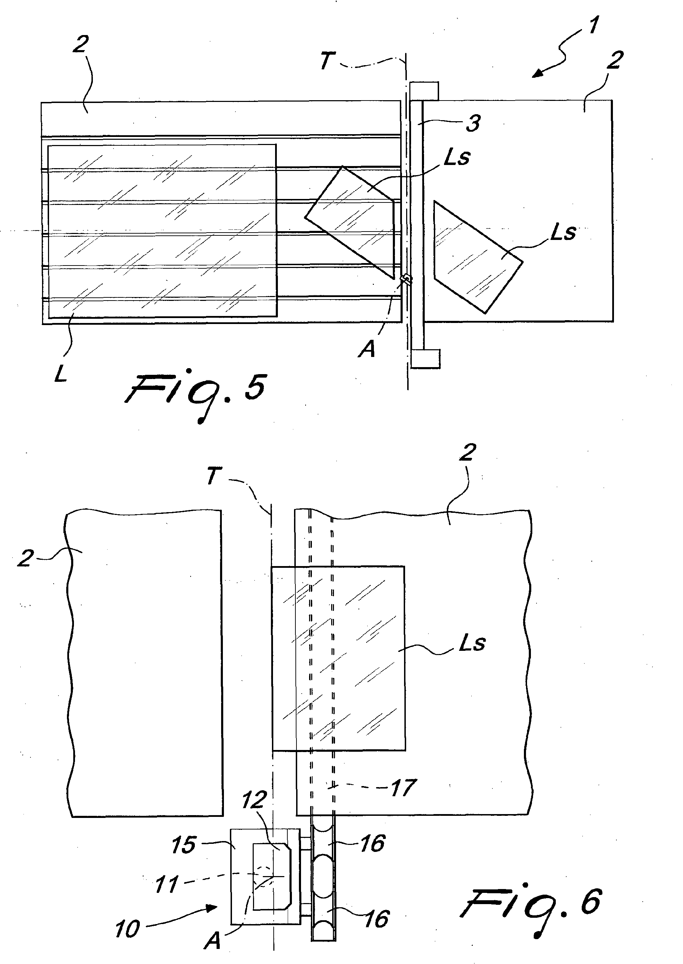

Figure 5 is a view of the execution of an oblique cut;
Figure 6 is a plan view of the machine with the grip and handling means arranged externally;

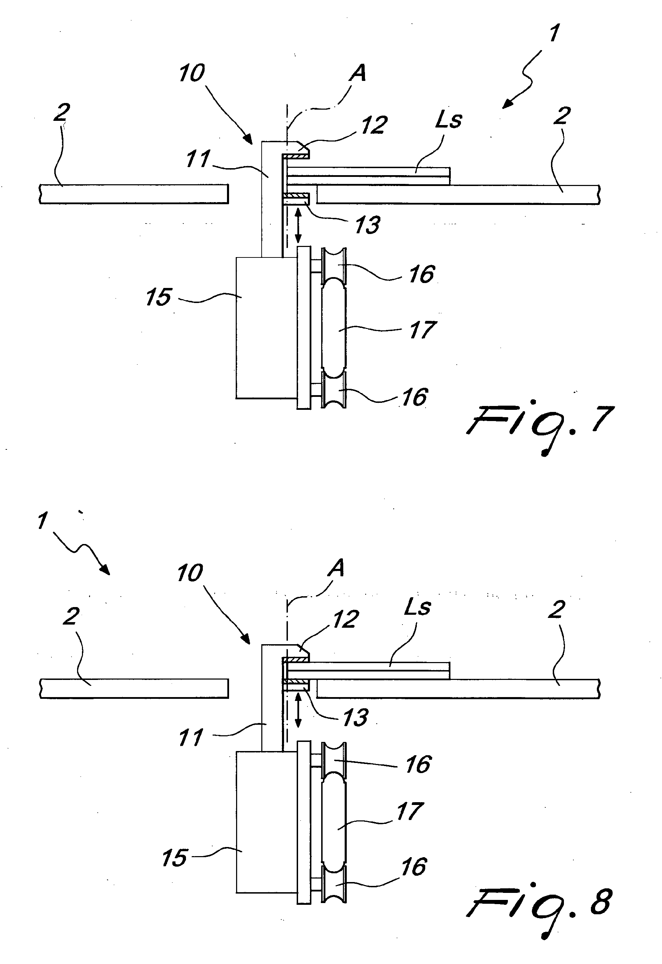

Figure 7 is an elevation view of the initial step of the positioning of the grip and handling means;
Figure 8 is a view of the step for gripping the portion of sheet to be handled;

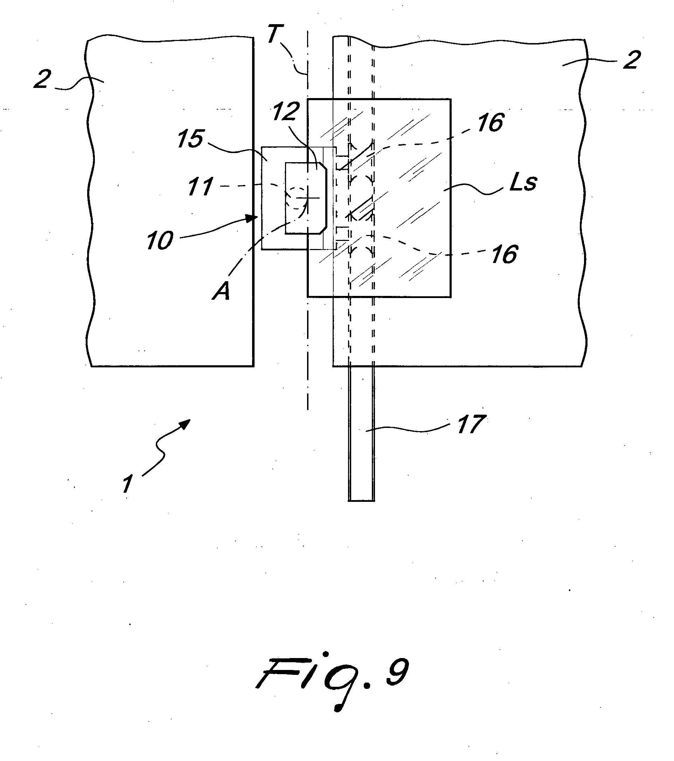

Figure 9 is a top plan view of the step for positioning the grip and handling means;

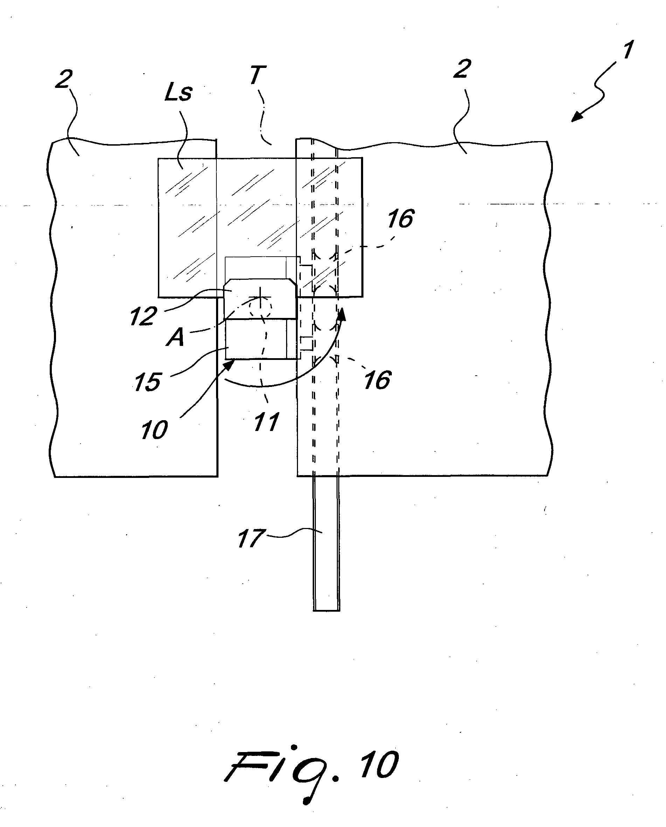

Figure 10 is a view of the step of rotation of the sheet portion;
Figure 11 is a schematic view of another embodiment of the grip and handling means;
Figure 12 is a view of means for removing the cut portion of sheet.

With reference to the figures, the machine for cutting a sheet of glass in general and of laminated glass in particular, with automatic positioning means, according to the invention, generally designated by the reference numeral 1, comprises, on a supporting frame, a worktable 2 on which it is possible to position at least one sheet of glass L to be cut, which can be constituted by a single glass sheet or by a laminated glass sheet obtained from two sheets mutually joined by a sheet of plastic material.

At the worktable a beam 3 is provided on which at least one cutting assembly can move and has, in a per se known manner, the traditional scoring head; there are also the usual means for cut running and optional parting in the case of laminated glass.

The cutting assembly acts along a cutting line which is designated by the reference letter T and advantageously is provided at a gap in the worktable 2, so as to allow the passage of any scoring heads provided to work the lower sheet.

A fundamental characteristic of the invention resides in that there are means for gripping and handling at least one portion of the sheet being worked, which is constituted for example by the portion Ls cropped from the sheet L; such means have the peculiarity that they engage the sheet with the possibility to rotate about an axis, designated by the reference letter A, which can be positioned on the cutting line T; the grip and handling means can perform a translational motion along the cutting line T.

In particular, according to an embodiment which must not be understood in any way in a limiting sense, the grip and handling means, generally designated by the reference numeral 10, comprise a clamp 11, which has an upper jaw 12 and a lower jaw 13 which can move with respect to each other and are arranged so that they can clamp onto the sheet Ls parted from the sheet being worked L.

The clamp 11 is supported by an actuation assembly 15, which advantageously allows to perform rotation about the axis A, which can be positioned on the cutting line or axis T at which the edge of the sheet Ls remains arranged.

Moreover, the actuation assembly 15 performs a translational motion along a direction which corresponds to the cutting line; for this purpose, there are guiding or sliding systems 16 which engage a guiding bar 17 connected to the frame of the machine.

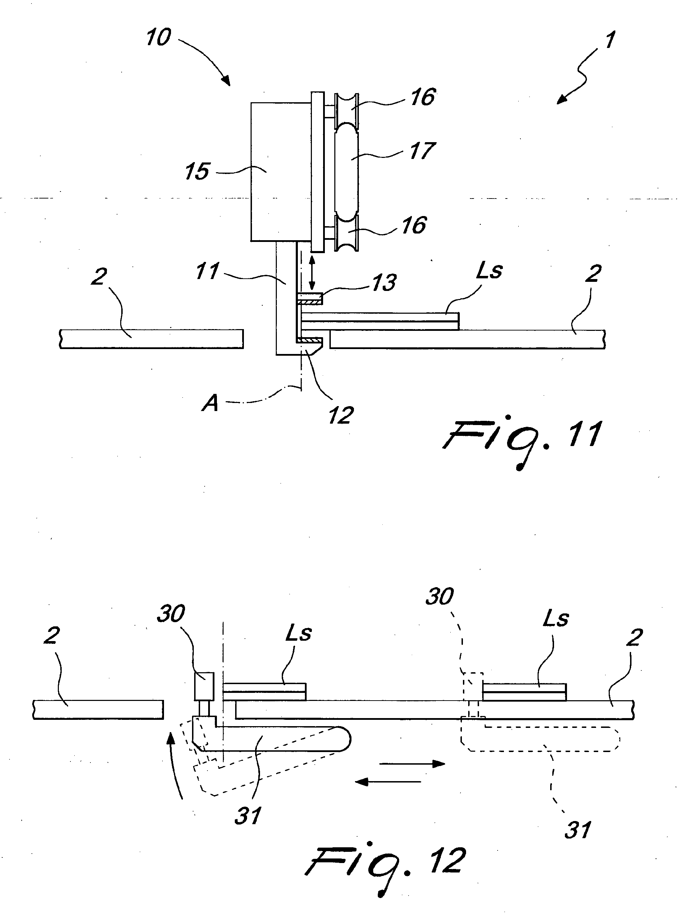

It should also be noted that the handling and grip assembly, as shown in Figure 11, can also be provided optionally above the worktable.

The system might also be conceived divided into two or more parts, arranged respectively one above and one below the worktable, thus capable of generating the same clamping effect but with the appearance and disappearance of the claws from the upper and lower sides of the machine.

The clamp 11 can perform a translational motion, by way of the action of the actuation assembly 15, so as to arrange itself below the worktable or optionally laterally to the worktable, so as to not interfere with the cutting assembly.

In practical use, in order to obtain a sheet which has given sides, first of all a sheet Ls is parted which has a measurement which corresponds to one side, then the grip and handling means 10 are positioned so that the rotation axis A is positioned with respect to the end of the sheet Ls by an extent which corresponds to the measurement of the other side.

To perform cutting, one proceeds, after parting the sheet Ls and after removing the remaining portion of the sheet, by positioning the means 10 and turning the sheet Ls through 90°, so that the sheet arranges itself with the cutting line at the required measurement, so as to perform the new cut without additional movements.

Optionally, if necessary, it is possible to position the sheet at the front edge of the worktable, or optionally it is possible to perform cutting on the sheet turned and positioned in a central portion of the worktable.

In practice, the machine allows to perform, after a first cut, retention of the cut sheet portion, and by means of a combined rotation and movement action the sheet is positioned to size at the cutting axis T, with a single targeted operation.

Substantially, the grip means have a rotation axis which always lies along the cutting line, offering the possibility to position the rotation axis both as a function of the cutting measurement to be performed and optionally so as to be able to turn even large sheets.

The combined rotary and translational motion, by providing a rotation point which in each instance is variable, allows to make the sheet perform any positioning movements before performing the rotation operation or the combined action of the movements, in order to go around any structures of the machine which might prevent rotation thereof.

It should also be noted that advantageously the worktable is provided with the usual air jets, which are designed to reduce in practice the weight of the sheet during all handling operations.

The system thus provided is not subject to limitations of minimum size, since by engaging the sheet on a previously formed cutting point it is possible to also engage particularly small or narrow sheet portions, differently from what occurs with the traditional sucker system.

Moreover, in order to move cut sheets of small sizes, it is possible to provide, proximate to the cutting line T, a removal assembly (Figure 12) which has engagement pins 30 supported between arms 31 which can oscillate in order to disengage the pins 30 from the worktable 2 and can perform a translational motion to remove even small sheets.

The clamps that are used allow to make the sheet perform rotations and translational motions which always occur at the cutting axis.

Optionally, the clamping device can also be used to perform a slight lifting movement of the sheet portion in the direction of the axis A, so as to minimize friction with the worktable, which is advantageously provided with an air cushion.

Once the sheet has been gripped, the clamp can provide the rotation and the translational motion according to what can be preset in order to be able to obtain an automatic management of the positioning of the sheet portions.

It should be added to the above that the clamp can engage the glass sheets both upstream and downstream of the cutting line and optionally on the cutting line as well.

Moreover, the handling means can be arranged on guiding means already provided on the machine or on separate guiding means.

Likewise, it is possible to provide carriages or movable parts which are already used for other operations, such as for example scoring or parting or which optionally can be mounted on a separate slider.

Likewise, rotation can be performed according to a preset angle clockwise or counterclockwise startling from any angle, or it is optionally also possible to preset a continuous rotation through 360° with the possibility of positioning, restarting and stopping at any selected angle.

The movements can be performed with any known system, such as for example a pneumatic, hydraulic, electric system, which may also be controlled electronically.

The jaws for gripping the sheet can have a more or less large grip surface and in particular the jaw that acts in an upward region can be small, with respect to the lower jaw, in order to allow the movement of glass sheets with any delicate coatings on the upper part.

From what has been described above it is therefore evident that the invention achieves the proposed aim and objects, and in particular the fact is stressed that a machine for cutting glass sheets is provided in which it is possible to provide completely automatically the management of the cutting operations, by utilizing grip and handling means which act at the cutting line, performing the translational motion and/or optional rotation about an axis which can be positioned along the cutting line.

Moreover, the positioning elements can be used also separately as a function of the automations to be provided.

## Claims

1. A machine (1) for cutting sheets of glass in general, and laminated glass in particular, with automatic positioning means, comprising, on a supporting frame, a worktable (2) for supporting at least one sheet (L), at least one cutting assembly being provided on said worktable (2) and acting along a cutting line (T), and means (10) for gripping and handling at least one portion (Ls) of the sheet (L) being worked, which can rotate about an axis, said axis being positioned on said cutting line (T), said means (10) for gripping and handling at least one portion (Ls) of the sheet (L) being worked performing a translational motion along said cutting line (T), **characterized in that** said grip and handling means (10) comprise a single clamp (11) which has an upper jaw (12) and a lower jaw (13) which can move with respect to each other to clamp onto the mutually opposite faces of said sheet (Ls) being worked, and **in that** it comprises an assembly (15) for actuating said clamp (11) to turn said clamp (11) about an axis (A) which can be positioned at said cutting line (T) and for the translational motion of said clamp (11) along said cutting line (T).

2. The machine according to claim 1, **characterized in that** said actuation assembly (15) comprises means for translational motion along a direction which is perpendicular to the plane of arrangement of said sheet (Ls).

3. The machine according to one or more of the preceding claims, **characterized in that** said actuation assembly (15) comprises guiding or sliding means (16) which can engage a guiding bar (17) which is associated with said frame for sliding along said cutting line (T).

4. The machine according to one or more of the preceding claims, **characterized in that** said actuation assembly (15) comprises means for the rotation of said clamp through a presettable angle.

5. The machine according to one or more of the preceding claims, **characterized in that** said actuation assembly (15) is arranged below said worktable (2).

6. The machine according to one or more of the preceding claims, **characterized in that** said actuation assembly (15) is positioned above said worktable (2).

7. The machine according to one or more of the preceding claims, **characterized in that** said actuation assembly (15) is arranged partially above said worktable (2) and partially below said worktable (2).

8. The machine according to one or more of the preceding claims, **characterized in that** said upper jaw (12) is smaller than said lower jaw (13).

9. The machine according to one or more of the preceding claims, **characterized in that** it comprises removal means for removing the cut sheet portion.

10. The machine according to one or more of the preceding claims, **characterized in that** said removal means comprise engagement pins (30) which are supported by arms which can oscillate and perform a translational motion along a direction which is perpendicular to the longitudinal direction of said cutting line (T).

11. The machine according to one or more of the preceding claims, **characterized in that** it comprises an arrissing assembly for working the edges of the cut sheet portions.

12. The machine according to one or more of the preceding claims, **characterized in that** it comprises an edging assembly for working the edges of the cut sheet.

## Patentansprüche

1. Maschine (1) zum Schneiden von Glasscheiben im Allgemeinen und von laminiertem Glas im Besonderen, mit automatischem Positionierungsmittel, umfassend auf einem tragenden Rahmen, einen Arbeitstisch (2) zum Tragen wenigstens einer Scheibe (L), wobei wenigstens eine Schneideeinheit an dem besagten Arbeitstisch (2) bereitgestellt ist und entlang einer Schneidelinie (T) wirkt, und ein Mittel (10) zum Greifen und Handhaben von wenigstens einem Teil (Ls) der Scheibe (L), welche bearbeitet wird, das um eine Achse rotieren kann, welche besagte Achse auf der besagten Schneidelinie (T) positioniert ist, welches besagte Mittel (10) zum Greifen und Handhaben von wenigstens einem Teil (Ls) der Scheibe (L), die bearbeitet wird, eine translatorische Bewegung entlang der besagten Schneidelinie (T) durchführt, **dadurch gekennzeichnet, dass** das besagte Mittel zum Greifen und Handhaben (10) eine einzelne Klemme (11) umfassen, welche eine obere Klemmbacke (12) und eine untere Klemmbacke (13) besitzt, die sich aufeinander zubewegen können, um die beiden gegenüberliegenden Seiten der besagten Scheibe (Ls), welche bearbeitet wird, festzuklemmen, und darin, dass sie eine Einheit (15) zur Betätigung der besagten Klemme (11) umfasst, um die besagte Klemme (11) um eine Achse (A) zu drehen, welche an der besagten Schneidelinie (T) positioniert sein kann, und für die translatorische Bewegung der besagten Klemme (11) entlang der besagten Schneidelinie (T).

2. Maschine nach Anspruch 1, **dadurch gekennzeichnet, dass** die besagte Betätigungseinheit (15) ein Mittel zur translatorischen Bewegung entlang einer Richtung umfasst, welche senkrecht zur Ebene der Anordnung der besagten Scheibe (Ls) ist.

3. Maschine nach einem oder mehreren der vorstehenden Ansprüche, **dadurch gekennzeichnet, dass** die besagte Betätigungseinheit (15) Führungs- oder Gleitmittel (16) umfasst, welche mit einer Führungsstange (17) gekuppelt werden können, die mit dem besagten Rahmen verbunden ist, um entlang der besagten Schneidelinie (T) zu gleiten.

4. Maschine nach einem oder mehreren der vorstehenden Ansprüche, **dadurch gekennzeichnet, dass** die besagte Betätigungseinheit (15) Mittel zur Rotation der besagten Klemme um einen voreinstellbaren Winkel umfasst.

5. Maschine nach einem oder mehreren der vorstehenden Ansprüche, **dadurch gekennzeichnet, dass** die besagte Betätigungseinheit (15) unterhalb des besagten Arbeitstisches (2) angeordnet ist.

6. Maschine nach einem oder mehreren der vorstehenden Ansprüche, **dadurch gekennzeichnet, dass** die besagte Betätigungseinheit (15) oberhalb des besagten Arbeitstisches (2) angeordnet ist.

7. Maschine nach einem oder mehreren der vorstehenden Ansprüche, **dadurch gekennzeichnet, dass** die besagte Betätigungseinheit (15) teilweise oberhalb des besagten Arbeitstisches (2) und teilweise unterhalb des besagten Arbeitstisches (2) angeordnet ist.

8. Maschine nach einem oder mehreren der vorstehenden Ansprüche, **dadurch gekennzeichnet, dass** die besagte obere Klemmbacke (12) kleiner als die besagte untere Klemmbacke (13) ist.

9. Maschine nach einem oder mehreren der vorstehenden Ansprüche, **dadurch gekennzeichnet, dass** sie ein Entfernungsmittel zum Entfernen des geschnittenen Scheibenteils umfasst.

10. Maschine nach einem oder mehreren der vorstehenden Ansprüche, **dadurch gekennzeichnet, dass** das besagte Entfernungsmittel Angreifstifte (30) umfasst, welche von Armen gestützt sind, die oszillieren und eine translatorische Bewegung entlang einer Richtung ausführen können, welche senkrecht zur Längsrichtung der besagten Schneidelinie (T) ist.

11. Maschine nach einem oder mehreren der vorstehenden Ansprüche, **dadurch gekennzeichnet, dass** sie eine aufsteigende Einheit zur Bearbeitung der Kanten der geschnittenen Scheibenteile umfasst.

12. Maschine nach einem oder mehreren der vorstehenden Ansprüche, **dadurch gekennzeichnet, dass** sie eine Kanteneinheit zur Bearbeitung der Kanten der geschnittenen Scheibe umfasst.

## Revendications

1. Machine (1) pour découper des plaques de verre en général, et du verre stratifié en particulier, avec des moyens de positionnement automatiques, comprenant, sur un cadre de support, une table de travail (2) pour supporter au moins une plaque (L), au moins un ensemble de découpe étant prévu sur ladite table de travail (2) et agissant le long d'une ligne de découpe (T), et des moyens (10) pour agripper et manutentionner au moins une portion (Ls) de la plaque (L) en cours de traitement qui peuvent tourner autour d'un axe, ledit axe étant positionné sur ladite ligne de découpe (T), lesdits moyens (10) pour agripper et manutentionner au moins une portion (Ls) de la plaque (L) en cours de traitement effectuant un mouvement de translation le long de ladite ligne de découpe (T), **caractérisée en ce que** lesdits moyens (10) d'agrippement et de manutention comprennent une pince (11) unique qui a une mâchoire supérieure (12) et une mâchoire inférieure (13) qui peuvent bouger l'une par rapport à l'autre pour agripper les faces mutuellement opposées de ladite plaque (Ls) en cours de traitement, et **en ce qu'**ils comprennent un ensemble (15) pour actionner ladite pince (11) pour faire tourner ladite pince (11) autour d'un axe (A) qui peut être positionné au niveau de ladite ligne de découpe (T) et pour le mouvement de translation de ladite pince (11) le long de ladite ligne de découpe (T).

2. Machine selon la revendication 1, **caractérisée en ce que** ledit ensemble d'actionnement (15) comprend des moyens pour le mouvement de translation le long d'une direction qui est perpendiculaire au plan d'agencement de ladite plaque (Ls).

3. Machine selon une ou plusieurs des revendications précédentes, **caractérisée en ce que** ledit ensemble d'actionnement (15) comprend des moyens de guidage ou de glissement (16) qui peuvent mettre en prise une barre de guidage (17) qui est associée audit cadre pour le glissement le long de ladite ligne de découpe (T).

4. Machine selon une ou plusieurs des revendications précédentes, **caractérisée en ce que** ledit ensemble d'actionnement (15) comprend des moyens pour la rotation de ladite pince sur un angle pouvant être préréglé.

5. Machine selon une ou plusieurs des revendications précédentes, **caractérisée en ce que** ledit ensemble d'actionnement (15) est agencé au-dessous de ladite table de travail (2).

6. Machine selon une ou plusieurs des revendications précédentes, **caractérisée en ce que** ledit ensemble d'actionnement (15) est positionné au-dessus de ladite table de travail (2).

7. Machine selon une ou plusieurs des revendications précédentes, **caractérisée en ce que** ledit ensemble d'actionnement (15) est agencé partiellement au-dessus de ladite table de travail (2) et partiellement au-dessous de ladite table de travail (2)

8. Machine selon une ou plusieurs des revendications précédentes, **caractérisée en ce que** ladite mâchoire supérieure (12) est plus petite que ladite mâchoire inférieure (13).

9. Machine selon une ou plusieurs des revendications précédentes, **caractérisée en ce qu'**elle comprend des moyens d'enlèvement pour enlever la portion de plaque découpée.

10. Machine selon une ou plusieurs des revendications précédentes, **caractérisée en ce que** lesdits moyens d'enlèvement comprennent des broches d'engagement (30) qui sont supportées par des bras qui peuvent osciller et effectuer un mouvement de translation le long d'une direction qui est perpendiculaire à la direction longitudinale de ladite ligne de découpe (T).

11. Machine selon une ou plusieurs des revendications précédentes, **caractérisée en ce qu'**elle comprend un ensemble de dérêtage pour traiter les bords des portions de plaque découpée.

12. Machine selon une ou plusieurs des revendications précédentes, **caractérisée en ce qu'**elle comprend un ensemble d'arrondissage pour traiter les bords de la plaque découpée.
